# EUROPÄISCHE PATENTSCHRIFT

(11) **EP 2 271 704 B1**
(45) Veröffentlichungstag und Bekanntmachung des Hinweises auf die Patenterteilung: **13.04.2016**
(21) Anmeldenummer: 09727433.6
(22) Anmeldetag: 04.02.2009
(51) Int. Cl.: C08J 7/16, C09D 161/28, C09D 161/32, C09D 7/12, B60S 1/38

(54) **BESCHICHTUNG FÜR ELASTOMERE STRANGFÖRMIGE PROFILE, INSBESONDERE SCHEIBENWISCHERBLÄTTER, UND VERFAHREN ZU DEREN HERSTELLUNG**
COATING FOR ELASTOMERIC LINEAR PROFILES, IN PARTICULAR WINDSCREEN WIPER BLADES, AND PROCESS FOR THEIR PRODUCTION
REVÊTEMENT POUR PROFILÉS ÉLASTOMÈRES EXTRUDÉS, NOTAMMENT DES BALAIS D'ESSUIE-GLACE, ET LEUR PROCÉDÉ DE PRÉPARATION

(30) Priorität: 02.04.2008 DE 102008000928
(43) Veröffentlichungstag der Anmeldung: 12.01.2011
(73) Patentinhaber: Robert Bosch GmbH, 70442 Stuttgart (DE)
(72) Erfinder: Duval, Vincent, 1030 Bruxelles-Schaerbeek (BE); Verburgh, Yves, B-2370 Puurs (BE); Carlier, Valerie, 5340 Gesves (BE)
(86) Internationale Anmeldenummer: PCT/EP2009/051267
(87) Internationale Veröffentlichungsnummer: WO 2009/121651

(56) Entgegenhaltungen:
- EP-A- 0 562 191
- WO-A1-2007/098982
- DE-A1- 19 741 225

## Beschreibung

Die vorliegende Erfindung betrifft eine Beschichtung für elastomere strangförmige Profile, wobei die Beschichtung in eine polymere Matrix eingebetteten Festschmierstoff umfasst. Sie betrifft weiterhin ein Wischblatt für Scheibenwischer, umfassend eine solche Beschichtung sowie ein Verfahren zur Herstellung eines erfindungsgemäß beschichteten elastomeren strangförmigen Profils.

### Stand der Technik

Wischblätter für Scheibenwischer können sich im Allgemeinen an die Kontur der Windschutzscheibe des Kraftfahrzeuges anpassen und bleiben bei verschiedenen Temperaturen ausreichen flexibel. Wischblätter werden daher in der Regel aus Elastomerprofilen und Gummimaterialien wie Naturgummi oder Chloropren hergestellt. Zusätzlich können Wischblätter aus Materialien wie Silikongummi oder Polyurethangummi gefertigt sein.

Verglichen mit anderen Werkstoffen wie Glas oder Plastik haben Elastomere hohe Gleitreibungskoeffizienten. Im Falle eines Wischblatts eines Scheibenwischers beträgt die Kraft, die für eine horizontale Bewegung des Scheibenwischers entlang der Windschutzscheibe aufgebracht werden muss, ein Vielfaches der vertikal durch den Kontakt mit der Windschutzscheibe auf das Profil des Wischblatts ausgeübten Anpresskraft. Zur Verringerung der Reibung können die Wischerblätter mit Beschichtungen versehen werden, welche einen niedrigen Reibungskoeffizienten haben.

Häufig werden Wischblätter auf Windschutzscheiben eingesetzt, welche mit hydrophoben Eigenschaften ausgestattet sind. Auf hydrophoben Windschutzscheiben verhalten sich Wischblätter wie beim Gleiten über eine trockene Oberfläche. Durch die wasserabstoßenden Oberfläche der Windschutzscheibe kann kein reibungsvermindernder Wasserfilm zwischen der Oberfläche und dem Wischblatt ausgebildet werden. Eine zusätzliche Beschichtung für Wischblätter muss also Anforderungen bezüglich der Gleiteigenschaften, der Verschleißbeständigkeit und dem schlierenfreien Wischen genügen.

Herkömmliche Beschichtungen für Wischblätter beinhalten Graphit oder Molybdändisulfid als partikelförmigen Festschmierstoff, um den Reibungskoeffizienten des Wischblatts auf der Scheibenoberfläche zu verringern. Die Wirksamkeit von Graphit als Festschmierstoff hängt größtenteils von seiner relativen Konzentration in der Beschichtung ab.

Nachteilig an bekannten Beschichtungen mit partikelförmigem Graphit als Schmierstoff ist, dass wegen der Weichheit und des benötigten hohen relativen Anteils der Graphitpartikel die Haftung untereinander in der Beschichtung reduziert wird. Somit steigt der Verschleiß der Beschichtung im Betrieb. Um die geforderten niedrigen Reibungskoeffizienten zu erreichen, wird der Graphitanteil der Beschichtung in der Regel oberhalb der kritischen Pigmentvolumenkonzentration eingestellt. Folglich nehmen die Kohäsionskräfte ab und es verringert sich die Widerstandsfähigkeit der Beschichtung.

Die Verwendung von harten Festschmierstoffen zur Erhöhung der Verschleißbeständigkeit führt zu schlechterer Wischqualität durch Schlieren- und Streifenbildung. Eine Erniedrigung des Graphitanteils, zum Beispiel auf unter 30%, führt dazu, dass die Oberfläche des einzelnen Graphitpartikels hauptsächlich mit dem Bindemittel beschichtet wird. Hierdurch sinkt die Schmierwirkung des Graphits und steigt so der Reibungskoeffizient der Beschichtung.

US 2003/0087767 A1 offenbart ein Gummiwischerblatt mit einem Beschichtungsfilm auf beiden Oberflächen des Lippenteils, wobei der Beschichtungsfilm ein partikelförmiges Feststoffschmiermittel und ein Bindemittel aufweist. Das Bindemittel weist nach dem Trocknen oder Aushärten ein 0,5%-Modul von 1 MPa oder mehr und eine Bruchlängung von 1% oder mehr auf. Die Bindemittel gemäß dieser Veröffentlichung liegen hierbei bereits in polymerer Form vor. Zur Beschichtung werden sie in Lösungsmitteln gelöst und auf ein Wischblatt aufgetragen. Nach einer gegebenenfalls vorangegangenen Vernetzung mittels Härtern wird das Lösungsmittel entfernt und die fertige Beschichtung gebildet. Diese Schrift geht jedoch nicht auf die Abriebfestigkeit der Beschichtung und somit auf die Lebensdauer des Wischblatts ein. Aus ökonomischer Sicht ist es von Nachteil, wenn überwiegend organische Lösungsmittel verwendet werden müssen, um das Bindemittel und das Feststoffschmiermittel auf das Wischblatt aufzutragen. Der überwiegende Einsatz organischer Lösungsmittel ist weiterhin unter Umweltschutzaspekten nicht wünschenswert.

Weiterhin ist aus der EP 0 562 191 A2 eine Vielzahl von Beschichtungen für Substrate wie etwa Wischblätter für Scheibenwischer, gebildet durch Auftragen einer Mischung aus Polytetrafluorethylen-Partikeln, Silikonpartikeln und Graphitpartikeln, Glycidyl-modifiziertem Bisphenol A, einer Glycidyl-modifizierten Dicarbonsäure und einem heterozyklischen Amin sowie einem Katalysator bekannt.

Darüber hinaus ist aus der DE 197 41 225 A1 eine Mehrzahl von Beschichtungen für Wischblätter für Scheibenwischer bekannt, gebildet durch Auftragen einer Mischung umfassend Polytetrafluorethylen-Partikel, Silikon-Partikel und GraphitPartikel als Festschmierstoffe, Hexamethoxymethylmelamin als niedermolekularen Vernetzer sowie ein mit Hydroxylgruppen modifiziertes fluorhaltiges Harz als polymeres Bindemittel.

Schließlich offenbart die WO 2007/098982 A1 Wischblätter für Scheibenwischer mit einer Beschichtung umfassend in eine polymere Matrix eines Bindemittels eingebetteten Festschmierstoff, wobei diese Beschichtung insbesondere als Gleitlack auf der Basis von Wasser und/oder eines oder mehrerer organischer Lösungsmittel aufgetragen werden kann. Bei dem Bindemittel kann es sich um Polyacrylat, Polyurethan oder Melaminharz handeln.

Offenbarung der Erfindung Erfindungsgemäß vorgeschlagen wird eine Beschichtung für elastomere strangförmige Profile, wobei die Beschichtung in eine polymere Matrix eingebetteten Festschmierstoff umfasst und wobei die polymere Matrix mit eingebettetem Festschmierstoff erhalten werden kann, indem man in Abwesenheit von polymeren Bindemitteln eine Mischung umfassend den Festschmierstoff und niedermolekularem Vernetzer polymerisiert.

Polymere Bindemittel bezeichnet hier Bindemittel, deren Moleküle ein Molekulargewicht von ≥ 1000 g/mol aufweisen. Die Abwesenheit solcher polymerer Bindemittel bedeutet, dass sie nicht oder nur in technisch unvermeidlicher Menge zugegen sind. Beispielsweise kann ihr Gehalt ≤ 0,1 Gewichts-% oder ≤ 0,01 Gewichts-% betragen.

Niedermolekulare Vernetzer im Sinne der vorliegenden Erfindung sind mindestens bifunktionelle monomere oder oligomere Verbindungen. Ihr Molekulargewicht liegt bei ≤ 1000 g/mol, vorzugsweise bei ≤ 500 g/mol. Durch reaktive Gruppen können die Vernetzermoleküle untereinander Bindungen ausbilden. Die reaktiven Gruppen können auch geblockt vorliegen, so dass sie erst bei Erwärmung freigesetzt werden und es zur Reaktion kommt. Die Polymerisation der Vernetzer kann beispielsweise thermisch, radikalisch oder strahleninduziert ablaufen. Mit eingeschlossen in den Begriff der Polymerisation sind Polykondensations- und Polyadditionsreaktionen. Nach Ende der Polymerisation liegt eine polymere Matrix vor, in welcher der Festschmierstoff eingebettet ist. Der Festschmierstoff liegt vorzugsweise in partikulärer Form vor. So kann die mittlere Teilchengröße ≥ 0,1 µm bis ≤ 15 µm betragen.

Erfindungsgemäß wurde erkannt, dass die an sich widersprüchlichen Anforderungen des in hohen Gehalten vorliegenden weichen Festschmierstoffs und der abriebfesten Matrix dadurch in Einklang gebracht werden können, dass zum Aufbau der Matrix auf ein polymeres Bindemittel verzichtet wird und stattdessen ein Vernetzer selbst polymerisiert wird. Selbst bei einem hohen Volumenverhältnis von Festschmierstoff zu Matrix herrschen ausreichende Kohäsionskräfte innerhalb der Matrix, um Festschmierstoffe zu binden. Gleichzeitig ist die Matrix so fest, dass die Abriebfestigkeit verbessert wird. Durch den Verzicht auf das polymere Bindemittel lässt sich das Herstellungsverfahren vereinfachen, da eine zu dosierende Komponente wegfällt.

In einer Ausführungsform der Beschichtung ist das Material des Festschmierstoffs ausgewählt aus der Gruppe umfassend Graphit, Molybdändisulfid, hexagonales Bornitrid, Glas-Mikrokugeln, Polytetrafluorethylen, Polyethylen und/oder Polypropylen. Besonders bevorzugt ist hierbei makrokristalliner natürlicher Graphit, da dieser aufgrund seines schuppenförmigen Aufbaus für besonders niedrige Reibungskoeffizienten sorgt. Ebenfalls bevorzugt ist eine Kombination aus makrokristallinem natürlichem Graphit und Polyethylen hoher Dichte (HDPE).

Erfindungsgemäß ist der niedermolekulare Vernetzer ausgewählt aus der Gruppe umfassend vollständig alkoxylierte Melaminderivate, partiell alkoxylierte Melaminderivate und/oder Hexamethoxymethylmelamin. Besonders bevorzugt ist hierbei das Hexamethoxymethylmelamin. Die genannten Vernetzer lassen sich auch ohne Bindemittel unter günstig zu realisierenden Prozessbedingungen zu einer Matrix polymerisieren. Die erhaltene Matrix weist die nötige Kohäsion zu den Festschmierstoffen auf und gleichzeitig die für eine Verschleißbeständigkeit erforderliche Härte. Zusätzlich weisen diese Vernetzer den Vorteil auf, gegebenenfalls zusammen mit einem Co-Solvens auch in Wasser löslich zu sein.

In einer weiteren Ausführungsform der Beschichtung liegt in der polymeren Matrix das Verhältnis der Phasenvolumina von Festschmierstoff zu polymerisertem Vernetzer in einem Bereich von ≥ 0,3 bis ≤ 9,0. Das Verhältnis kann auch in einem Bereich von ≥ 0,4 bis ≤ 3,0 oder von ≥ 1,0 bis ≤ 1,5 liegen. Bei solchen Volumenverhältnissen werden besonders gute Schmiereigenschaften bei gleichzeitiger Verschleißbeständigkeit erreicht.

Gegenstand der vorliegenden Erfindung ist weiterhin ein Wischblatt für Scheibenwischer, umfassend eine Beschichtung nach der vorliegenden Erfindung. Das Grundmaterial des Wischblatts kann beispielsweise Gummi, Chloropren, Silikonkautschuk, elastomeres Polyurethan oder ein anderes Elastomer sein. Die erfindungsgemäße Beschichtung kann vorteilhafterweise nach dem Trocknen und Aushärten in einer Filmdicke von ≥ 1 µm bis ≤ 10 µm, von ≥ 2 µm bis ≤ 8 µm oder von ≥ 4 µm bis ≤ 6 µm vorliegen.

In einer Ausführungsform des Wischblatts für Scheibenwischer ist auf der polymerisierten Beschichtung und/oder auf einer unbeschichteten Oberfläche eine weitere Schicht angeordnet, welche Festschmierstoff umfasst. Der Festschmierstoff ist in dieser Schicht nicht in eine vernetzte polymere Matrix eingebettet. Dadurch, dass der Festschmierstoff nicht fixiert ist, kann er sich schneller und gleichmäßiger über die beschichtete und zunächst unbeschichtete Oberfläche verteilen. Man kann solche Wischblätter erhalten, indem zunächst ein Doppelprofil des Wischblatts mit der erfindungsgemäßen vernetzten Beschichtung versieht und dann das Profil in zwei Einzelprofile trennt. Hierbei ist die Schnittfläche diejenige Fläche, welche beim Betrieb des Scheibenwischers auf der Windschutzscheibe aufliegt. Die Zusammensetzung der getrockneten weiteren Schicht kann beispielsweise ≥ 4 Gewichts-% bis < 15 Gewichts-% unvernetztes Bindemittel, ≥ 0,5 Gewichts-% bis ≤ 4 Gewichts-% Verdickungsmittel, ≥ 1,0 Gewichts-% bis ≤ 11 Gewichts-% Tensid und ≥ 80 Gewichts-% bis ≤ 90 Gewichts-% Graphit betragen.

Die vorliegende Erfindung betrifft weiterhin ein Verfahren zur Herstellung eines beschichteten elastomeren strangförmigen Profils, wobei das Profil mit einer erfindungsgemäßen Beschichtung versehen wird, umfassend die Schritte:
a) Auftragen einer Mischung umfassend Festschmierstoff und niedermolekularem Vernetzer auf das Profil
b) Erhitzen auf eine Temperatur von ≥ 100 °C bis ≤ 200 °C

In Schritt a) wird das Elastomerprofil beschichtet. Dieses kann unter Anderem durch Tauchen oder Besprühen geschehen. Der Festschmierstoff in der aufzutragenden Mischung kann beispielsweise einen Anteil von ≥ 5 Gewichts-% bis ≤ 25 Gewichts-% oder von ≥ 9 Gewichts-% bis ≤ 21 Gewichts-% ausmachen. Der niedermolekulare polymeriserbare Vernetzer kann beispielsweise einen Anteil von ≥ 5 Gewichts-% bis ≤ 15 Gewichts-% oder von ≥ 7 Gewichts-% bis ≤ 10 Gewichts-% ausmachen.

In Schritt b) wird der niedermolekulare polymerisierbare Vernetzer thermisch polymerisiert. Hierdurch bildet sich die Polymermatrix aus, welche die

Festschmierstoffpartikel einbettet. Man kann für ≥ 3 Minuten bis ≤ 25 Minuten oder für > 10 Minuten bis ≤ 15 Minuten die thermische Polymerisation durchführen. Dieses Erhitzen kann auch bei einer Temperatur von ≥ 140 °C bis ≤ 160 °C stattfinden. Man kann zusätzlich vor dem thermischen Polymerisieren einen Trocknungsschritt vorschalten, um das Lösungsmittel aus der Beschichtungsmischung zu entfernen.

In einer Ausführungsform des Verfahrens ist in der Mischung aus Schritt a) das Material des Festschmierstoffs ausgewählt aus der Gruppe umfassend Graphit, Molybdändisulfid, hexagonales Bornitrid, Glas-Mikrokugeln, Polytetrafluorethylen, Polyethylen und/oder Polypropylen. Grundsätzlich ist in der Mischung aus Schritt a) der niedermolekulare Vernetzer ausgewählt aus der Gruppe umfassend vollständig alkoxylierte Melaminderivate, partiell alkoxylierte Melaminderivate und/oder Hexamethoxymethylmelamin. Die Vorteile der Auswahl dieser Materialien wurden bereits obenstehend erläutert.

In einer weiteren Ausführungsform des Verfahrens umfasst die Mischung aus Schritt a) weiterhin Polyacrylat-Verdickungsmittel, Butylglycol und Wasser. Wasser ist aus Gründen des Umweltschutzes, der Verfahrenssicherheit und aus Kostengründen das bevorzugte Hauptlösungsmittel. Das Wasser kann beispielsweise in der Beschichtungsmischung einen Anteil von ≥ 50 Gewichts-% bis ≤ 90 Gewichts-% oder von ≥ 60 Gewichts-% bis ≤ 80 Gewichts-% ausmachen. Butylglykol dient als Co-Solvens, damit der niedermolekulare Vernetzer wie insbesondere Hexamethoxymethylmelamin in Lösung gehalten werden kann. Butylglykol kann beispielsweise in der Beschichtungsmischung einen Anteil von ≥ 10 Gewichts-% bis ≤ 20 Gewichts-% oder von ≥ 14 Gewichts-% bis ≤ 16 Gewichts-% ausmachen. Das Polyacrylat-Verdickungsmittel dient dazu, die Viskosität der Beschichtungsmischung so einzustellen, dass auch auf unpolaren Substratoberflächen eine durchgehende Beschichtung aufgebaut werden kann. Weiterhin werden aufgrund der erhöhten Viskosität die Graphitpartikel besser in Dispersion gehalten. Das Verdickungsmittel kann beispielsweise in der Beschichtungsmischung einen Anteil von ≥ 1 Gewichts-% bis ≤ 5 Gewichts-% oder von ≥ 2 Gewichts-% bis ≤ 3 Gewichts-% ausmachen.

In einer weiteren Ausführungsform des Verfahrens wird nach dem Erhitzen in Schritt b) auf der polymerisierten Beschichtung und/oder auf einer unbeschichteten Oberfläche eine Mischung aufgetragen, welche Festschmierstoff umfasst. Weiterhin wird das beschichtete Profil bei einer Temperatur von ≥ 50 °C bis ≤ 100 °C getrocknet. Beispielsweise kann dieses geschehen, nachdem ein zuvor beschichtetes Doppelprofil in zwei Einzelprofile getrennt wurde. Dann ist die unbeschichtete Oberfläche die Schnittfläche. Die Temperatur wird so gewählt, dass keine Vernetzung eines Bindemittels eintritt, sondern dass nur das Lösungsmittel aus der Mischung entweicht. Ein weiterer geeigneter Temperaturbereich ist von ≥ 80 °C bis ≤ 90 °C Dadurch, dass der Festschmierstoff nicht fixiert ist, kann er sich schneller und gleichmäßiger über der polymerisierten Beschichtung und über die zunächst unbeschichtete Schnitt-Oberfläche verteilen.

Die vorliegende Erfindung wird anhand der nachfolgenden Beispiele weiter erläutert.

### Beispiel 1

Eine wässrige Beschichtungszusammensetzung umfassend ein methyliertes Imino-Melamin-Aminoplast, einen Schmierstoffgraphit-Füllstoff und ein Verdickungsmittel wurde auf ein Elastomersubstrat aufgetragen. Die Beschichtungszusammensetzung wies die folgende Rezeptur auf:

| | Gewichtsanteil |
|---|---|
| Cymel 303 | 10,0 |
| Graphit | 9,0 |
| Polyacrylat-Verdickungsmittel | 3,0 |
| Butylglykol | 14,0 |
| Entionisiertes Wasser | 64,0 |
| Summe: | 100,0 |

Cymel 303 ist ein Handelsname der Firma Cytec für Hexamethoxymethylmelamin.

In diesem Beispiel war das Elastomersubstrat ein Doppelprofil eines Wischblatts, welches aus einer chlorierten Gummimischung durch Spritzgießen erhalten wurde. Nach anfänglichem Trocknen zum Entfernen der Lösungsmittel wurden die Doppelprofile für 10 Minuten bei 150 °C ausgehärtet. Es wurde ein 4 µm dicker Film mit der folgenden Zusammensetzung der Graphit- und Polymermatrixkomponenten erhalten:

| | Gewichts-% | Volumen-% |
|---|---|---|
| Feste Fraktion des polymerisierten Cymel 303 | 51,5 | 67,4 |
| Feste Fraktion des Graphits | 47,3 | 31,0 |
| Verdickungsmittel | 1,2 | 1,6 |
| Summe: | 100,0 | 100,0 |

Nach dem Aushärten wurden die Doppelprofile in zwei Einzelprofile getrennt. Eine Untersuchung der Schnittflächen ergab keine Beschädigung oder Abplatzen der Beschichtung von der Schnittfläche.

Das Verhältnis der Volumenphasen von Graphit zu polymerisiertem Vernetzer lag hier bei 0,46. Hierdurch wurden gute Rutscheigenschaften der Beschichtung erhalten. Die Graphitpartikel waren durch die Polymermatrix fest miteinander verbunden, wodurch sowohl auf hydrophoben als auch auf hydrophilen Scheibenoberflächen eine gute Abriebfestigkeit erhalten wurde.

### Beispiel 2

Eine wässrige Beschichtungszusammensetzung umfassend ein methyliertes Imino-Melamin-Aminoplast, einen Schmierstoffgraphit-Füllstoff und ein Verdickungsmittel wurde auf ein Elastomersubstrat aufgetragen. Die Beschichtungszusammensetzung wies die folgende Rezeptur auf:

| | Gewichtsanteil |
|---|---|
| Cymel 303 | 10,0 |
| Graphit | 21,0 |
| Polyacrylat-Verdickungsmittel | 3,0 |
| Butylglykol | 14,0 |
| Entionisiertes Wasser | 52,0 |
| Summe: | 100,0 |

In diesem Beispiel war das Elastomersubstrat ein Doppelprofil eines Wischblatts, welches aus einer chlorierten Gummimischung durch Spritzgießen erhalten wurde. Nach anfänglichem Trocknen zum Entfernen der Lösungsmittel wurden die Doppelprofile für 10 Minuten bei 150 °C ausgehärtet. Es wurde ein 4 µm dicker Film mit der folgenden Zusammensetzung der Graphit- und Polymermatrixkomponenten erhalten:

| | Gewichts-% | Volumen-% |
|---|---|---|
| Feste Fraktion des polymerisierten Cymel 303 | 31,6 | 47,7 |
| Feste Fraktion des Graphits | 67,7 | 51,2 |
| Verdickungsmittel | 0,7 | 1,1 |
| Summe: | 100,0 | 100,0 |

Nach dem Aushärten wurden die Doppelprofile in zwei Einzelprofile getrennt. Eine Untersuchung der Schnittflächen ergab keine Beschädigung oder Abplatzen der Beschichtung von der Schnittfläche.

Das Verhältnis der Volumenphasen von Graphit zu polymerisiertem Vernetzer wurde hier auf 1,08 erhöht. Hierdurch wurden gute Rutscheigenschaften der Beschichtung erhalten. Die Graphitpartikel waren durch die Polymermatrix immer noch fest miteinander verbunden, wodurch sowohl auf hydrophoben als auch auf hydrophilen Scheibenoberflächen eine gute Abriebfestigkeit erhalten wurde.

### Beispiel 3

Eine wässrige Beschichtungszusammensetzung umfassend ein methyliertes Imino-Melamin-Aminoplast, einen Schmierstoffgraphit-Füllstoff, eine Polyethylendispersion und ein Verdickungsmittel wurde auf ein Elastomersubstrat aufgetragen. Die Beschichtungszusammensetzung wies die folgende Rezeptur auf:

| | Gewichtsanteil |
|---|---|
| Cymel 303 | 10,0 |
| Graphit | 9,0 |
| HDPE-Dispersion | 8,8 |
| Polyacrylat-Verdickungsmittel | 3,0 |
| Butylglykol | 15,8 |
| Entionisiertes Wasser | 72,4 |
| Summe: | 119,0 |

Die Dispersion des Polyethylens hoher Dichte (HDPE) wies einen Feststoffgehalt von 35% auf.

In diesem Beispiel war das Elastomersubstrat ein Doppelprofil eines Wischblatts, welches aus einer chlorierten Gummimischung durch Spritzgießen erhalten wurde. Nach anfänglichem Trocknen zum Entfernen der Lösungsmittel wurden die Doppelprofile für 10 Minuten bei 150 °C ausgehärtet. Es wurde ein 4 µm dicker Film mit der folgenden Zusammensetzung der Schmierstoff- und Polymermatrixkomponenten erhalten:

| | Gewichts-% | Volumen-% |
|---|---|---|
| Feste Fraktion des polymerisierten Cymel 303 | 44,3 | 55,6 |
| Feste Fraktion des Graphits | 40,7 | 25,5 |
| Feste Fraktion des HDPE | 14,0 | 17,6 |
| Verdickungsmittel | 1,0 | 1,3 |
| Summe: | 100,0 | 100,0 |

Nach dem Aushärten wurden die Doppelprofile in zwei Einzelprofile getrennt. Eine Untersuchung der Schnittflächen ergab keine Beschädigung oder Abplatzen der Beschichtung von der Schnittfläche.

Das Verhältnis der Volumenphasen von Schmiermittel (Graphit und HDPE) zu polymerisiertem Vernetzer betrug hier 0,78. Hierdurch wurden gute Rutscheigenschaften der Beschichtung erhalten. Die Graphitpartikel waren durch die Polymermatrix fest miteinander verbunden, wodurch sowohl auf hydrophoben als auch auf hydrophilen Scheibenoberflächen eine gute Abriebfestigkeit erhalten wird.

### Beispiel 4

Eine wässrige Beschichtungszusammensetzung umfassend ein methyliertes Imino-Melamin-Aminoplast, einen Schmierstoffgraphit-Füllstoff, eine Polyethylendispersion und ein Verdickungsmittel wurde auf ein Elastomersubstrat aufgetragen. Die Beschichtungszusammensetzung wies die folgende Rezeptur auf:

| | Gewichtsanteil |
|---|---|
| Cymel 303 | 7,0 |
| Graphit | 9,0 |
| HDPE-Dispersion | 8,8 |
| Polyacrylat-Verdickungsmittel | 2,5 |
| Butylglykol | 15,8 |
| Entionisiertes Wasser | 56,9 |
| Summe: | 100,0 |

Die Dispersion des Polyethylens hoher Dichte (HDPE) wies einen Feststoffgehalt von 35% auf.

In diesem Beispiel war das Elastomersubstrat ein Doppelprofil eines Wischblatts, welches aus einer chlorierten Gummimischung durch Spritzgießen erhalten wurde. Nach anfänglichem Trocknen zum Entfernen der Lösungsmittel wurden die Doppelprofile für 10 Minuten bei 150 °C ausgehärtet. Es wurde ein 4 µm dicker Film mit der folgenden Zusammensetzung der Schmierstoff- und Polymermatrixkomponenten erhalten:

| | Gewichts-% | Volumen-% |
|---|---|---|
| Feste Fraktion des polymerisierten Cymel 303 | 35,9 | 46,9 |
| Feste Fraktion des Graphits | 47,0 | 30,8 |
| Feste Fraktion des HDPE | 16,1 | 21,0 |
| Verdickungsmittel | 1,0 | 1,3 |
| Summe: | 100,0 | 100,0 |

Nach dem Aushärten wurden die Doppelprofile in zwei Einzelprofile getrennt. Eine Untersuchung der Schnittflächen ergab keine Beschädigung oder Abplatzen der Beschichtung von der Schnittfläche.

Das Verhältnis der Volumenphasen von Schmiermittel (Graphit und HDPE) zu polymerisiertem Vernetzer wurde hier auf 1,10 erhöht. Hierdurch wurden gute Rutscheigenschaften der Beschichtung erhalten. Die Graphitpartikel waren immer noch durch die Polymermatrix fest miteinander verbunden, wodurch sowohl auf hydrophoben als auch auf hydrophilen Scheibenoberflächen eine gute Abriebfestigkeit erhalten wird.

### Beispiel 5

Eine Beschichtung gemäß Beispiel 1 wurde aufgetragen und ausgehärtet. Nach dem Schneiden und Trennen der Doppelprofile in Einzelprofile wurde auf die Einzelprofile eine Graphitdispersion aufgesprüht. Die zunächst aufgetragene Graphit enthaltende polymerisierte Beschichtung wirkte nun als Basisschicht. Die Graphitdispersion wurde bei 90 °C getrocknet, um das wässrige Lösungsmittel zu entfernen. Eine unvernetzte Deckschicht wurde erhalten, welche sowohl die Basisschicht als auch die Schnittfläche der Einzelprofile bedeckte. Die getrocknete Deckschicht enthielt 4,6 Gewichts-% Polymerbindemittel, 3,4 Gewichts-% Verdickungsmittel, 10,2 Gewichts-% Tensid und 81,8 Gewichts-% Graphit.

Diese doppelt beschichteten Wischblätter wurden für 30 Minuten auf einer hydrophoben Automobilwindschutzscheibe getestet. Wasser wurde auf die Scheibe gesprüht, um Regen zu simulieren. Die aufgezeichneten Ratter-Amplituden blieben mit weniger als 8 mm auf einem konstant niedrigen Niveau während des Tests. Die Wischblätter liefen ruhig und ohne Geräuschentwicklung über die Windschutzscheibe. Die Wischqualität blieb ausgezeichnet.

## Patentansprüche

1. Elastomeres strangförmiges Profil mit einer Beschichtung, wobei die Beschichtung in eine polymere Matrix eingebetteten Festschmierstoff umfasst, **dadurch gekennzeichnet, dass** die polymere Matrix mit eingebettetem Festschmierstoff erhalten werden kann, indem man in Abwesenheit von polymeren Bindemitteln eine Mischung umfassend den Festschmierstoff und niedermolekularem Vernetzer polymerisiert, wobei der niedermolekulare Vernetzer ausgewählt ist aus der Gruppe umfassend vollständig alkoxylierte Melaminderivate, partiell alkoxylierte Melaminderivate und/oder Hexamethoxymethylmelamin.

2. Elastomeres strangförmiges Profil nach Anspruch 1, wobei das Material des Festschmierstoffs ausgewählt ist aus der Gruppe umfassend Graphit, Molybdändisulfid, hexagonales Bornitrid, Glas-Mikrokugeln, Polytetrafluorethylen, Polyethylen und/oder Polypropylen.

3. Elastomeres strangförmiges Profil nach einem der Ansprüche 1 bis 2, wobei in der polymeren Matrix das Verhältnis der Phasenvolumina von Festschmierstoff zu polymerisertem Vernetzer in einem Bereich von ≥ 0,3 bis ≤ 9,0 liegt.

4. Wischblatt für Scheibenwischer, umfassend ein elastomeres, strangförmiges Profil nach einem der Ansprüche 1 bis 3.

5. Wischblatt für Scheibenwischer nach Anspruch 4, wobei auf der polymerisierten Beschichtung und/oder auf einer unbeschichteten Oberfläche eine weitere Schicht angeordnet ist, welche Festschmierstoff umfasst und wobei der Festschmierstoff in dieser Schicht nicht in eine vernetzte polymere Matrix eingebettet ist.

6. Verfahren zur Herstellung eines beschichteten elastomeren strangförmigen Profils nach einem der Ansprüche 1 bis 3, umfassend die Schritte:
a) Auftragen einer Mischung umfassend Festschmierstoff und niedermolekularem Vernetzer auf das Profil
b) Erhitzen auf eine Temperatur von ≥ 100 °C bis ≤ 200 °C

7. Verfahren nach Anspruch 6, wobei in der Mischung aus Schritt a) das Material des Festschmierstoffs ausgewählt ist aus der Gruppe umfassend Graphit, Molybdändisulfid, hexagonales Bornitrid, Glas-Mikrokugeln, Polytetrafluorethylen, Polyethylen und/oder Polypropylen.

8. Verfahren nach Anspruch 6 oder 7, wobei die Mischung aus Schritt a) weiterhin Polyacrylat-Verdickungsmittel, Butylglycol und Wasser umfasst.

9. Verfahren nach einem der Ansprüche 6 bis 8, wobei weiterhin nach dem Erhitzen in Schritt b) auf der polymerisierten Beschichtung und/oder auf einer unbeschichteten Oberfläche eine Mischung aufgetragen wird, welche Festschmierstoff umfasst und wobei das beschichtete Profil bei einer Temperatur von ≥ 50 °C bis ≤ 100 °C getrocknet wird.

## Claims

1. Elastomeric linear profile with a coating, where the coating comprises solid lubricant embedded into a polymeric matrix, **characterized in that** the polymeric matrix can be obtained with embedded solid lubricant by polymerizing, in the absence of polymeric binders, a mixture comprising the solid lubricant and low-molecular-weight crosslinking agent, where the low-molecular-weight crosslinking agent is selected from the group consisting of fully alkoxylated melamine derivatives, partially alkoxylated melamine derivatives, and/or hexamethoxymethylmelamine.

2. Elastomeric linear profile according to Claim 1, where the material of the solid lubricant is selected from the group consisting of graphite, molybdenum disulfide, hexagonal boron nitride, glass microbeads, polytetrafluoroethylene, polyethylene, and/or polypropylene.

3. Elastomeric linear profile according to either of Claims 1 and 2, where, within the polymeric matrix, the phase-volume ratio of solid lubricant to polymerized crosslinking agent is in a range from ≥ 0.3 to ≤ 9.0.

4. Wiper blade for windshield wipers, comprising an elastomeric linear profile according to any of Claims 1 to 3.

5. Wiper blade for windshield wipers according to Claim 4, where a further layer has been arranged on the polymerized coating and/or on an uncoated surface and comprises solid lubricant, and where, in said layer, the solid lubricant has not been embedded into a crosslinked polymeric matrix.

6. Process for producing a coated elastomeric linear profile, according to any of Claims 1 to 3, comprising the steps of:
a) applying a mixture comprising solid lubricant and low-molecular-weight crosslinking agent to the profile
b) heating to a temperature of from ≥ 100°C to ≤ 200°C.

7. Process according to Claim 6, where, in the mixture of step a), the material of the solid lubricant is selected from the group consisting of graphite, molybdenum disulfide, hexagonal boron nitride, glass microbeads, polytetrafluoroethylene, polyethylene, and/or polypropylene.

8. Process according to Claim 6 or 7, where the mixture of step a) moreover comprises polyacrylate thickener, butyl glycol, and water.

9. Process according to any of Claims 6 to 8, where moreover, after the heating process in step b), a mixture which comprises solid lubricant is applied on the polymerized coating and/or on an uncoated surface, and where the coated profile is dried at a temperature of from ≥ 50°C to ≤ 100°C.

## Revendications

1. Profilé élastomère en forme de boudin, comportant un revêtement, le revêtement comprenant un lubrifiant solide incorporé dans une matrice polymère, **caractérisé en ce que** la matrice polymère comportant un lubrifiant solide incorporé peut être obtenue par polymérisation, en l'absence de liants polymères, d'un mélange comprenant le lubrifiant solide et un agent de réticulation à faible masse moléculaire, l'agent de réticulation à faible masse moléculaire étant choisi dans le groupe comprenant les dérivés de mélamine entièrement alcoxylés, les dérivés de mélamine partiellement alcoxylés, et/ou l'hexaméthoxyméthylmélamine.

2. Profilé élastomère en forme de boudin selon la revendication 1, dans lequel le matériau du lubrifiant solide est choisi dans le groupe comprenant le graphite, le disulfure de molybdène, le nitrure de bore hexagonal, les microbilles de verre, le polytétrafluoréthylène, le polyéthylène et/ou le polypropylène.

3. Profilé élastomère en forme de boudin selon l'une des revendications 1 à 2, dans lequel, dans la matrice polymère, le rapport, en volumes de phase, du lubrifiant solide à l'agent de réticulation polymérisé est compris dans la plage de ≥ 0,3 à ≤ 9,0.

4. Balai d'essuie-glace, comprenant un profilé élastomère en forme de boudin selon l'une des revendications 1 à 3.

5. Balai d'essuie-glace selon la revendication 4, dans lequel une couche supplémentaire, qui comprend un lubrifiant solide, est disposée sur le revêtement polymérisé et/ou sur une surface non-revêtue, le lubrifiant solide de cette couche n'étant pas incorporé dans une matrice polymère réticulée.

6. Procédé de fabrication d'un profilé élastomère revêtu en forme de boudin selon l'une des revendications 1 à 3, comprenant les étampes :
a) application, sur le profil, d'un mélange comprenant un lubrifiant solide et un agent de réticulation à faible masse moléculaire,
b) chauffage à une température de ≥ 100°C à ≤ 200°C.

7. Procédé selon la revendication 6, dans lequel, dans le mélange de l'étape a), le matériau du lubrifiant solide est choisi dans le groupe comprenant le graphite, le disulfure de molybdène, le nitrure de bore hexagonal, les microbilles de verre, le polytétrafluoréthylène, le polyéthylène et/ou le polypropylène.

8. Procédé selon la revendication 6 ou 7, dans lequel le mélange de l'étape a) comprend en outre un agent épaississant de type polyacrylate, du butylglycol et de l'eau.

9. Procédé selon l'une des revendications 6 à 8, dans lequel, après le chauffage de l'étape b), on applique un mélange, qui comprend un lubrifiant solide, sur le revêtement polymérisé et/ou sur une surface non revêtue, le profilé revêtu étant séché à une température ≥ 50°C à ≤ 100°C.
